# EUROPÄISCHE PATENTSCHRIFT

(11) **EP 4 481 719 B1**
(45) Veröffentlichungstag und Bekanntmachung des Hinweises auf die Patenterteilung: **08.04.2026**
(21) Anmeldenummer: 23180187.9
(22) Anmeldetag: 19.06.2023
(51) Int. Cl.: G09F 13/18, F21V 8/00

(54) **SICHERHEITS- UND/ODER RETTUNGSZEICHENLEUCHTE**
SAFETY AND/OR RESCUE SIGN LAMP
LAMPE DE SIGNALISATION DE SÉCURITÉ ET/OU DE SAUVETAGE

(43) Veröffentlichungstag der Anmeldung: 25.12.2024
(73) Patentinhaber: din - Dietmar Nocker Facilitymanagement GmbH & Co KG, 4030 Linz (AT)
(72) Erfinder:
(74) Vertreter: Jell, Friedrich

(56) Entgegenhaltungen:
- EP-A1- 2 942 772
- EP-A2- 2 650 865
- WO-A1-2023/003478
- CN-U- 209 461 106
- CN-U- 216 084 212

## Beschreibung

Die Erfindung betrifft eine Sicherheits- und/oder Rettungszeichenleuchte, insbesondere für eine Notbeleuchtungsanlage, mit mindestens einem ersten Leuchtmittel, insbesondere mit mindestens einer LED, mit einer mit dem ersten Leuchtmittel optisch verbundenen, lichtleitenden Platte zur Hinterleuchtung einer Anzeige und mit einem, insbesondere im Querschnitt u-förmigen, Außengehäuse, in das eine erste, insbesondere obere, Schmalseite der lichtleitenden Platte einragt, und mit zumindest einem zwischen Außengehäuse und lichtleitender Platte vorgesehenen Halteelement, das die lichtleitende Platte im Außengehäuse hält und hierfür einen Steg und zumindest einen davon abstehenden und ein Schnappelement ausbildenden Schenkel mit einem Schnappvorsprung aufweist.

Um bei Sicherheits- und/oder Rettungszeichenleuchten eine lichtleitende Platte zur Hinterleuchtung einer Anzeige in einem Außengehäuse zu befestigen, ist es aus dem Stand der Technik bekannt (EP2650856A2), ein Halteelement in Form eines U-Profils zu verwenden, das in, sich gegenüberliegenden Nuten der Platte einschnappt und mit dem Außengehäuse über eine Schraubverbindung fest verbunden ist. Das Halteelement weist hierfür zwei von einem Steg abstehende und Schnappelemente ausbildende Schenkel und einen Gewindezapfen am Steg auf. Zuerst wird das Halteelement mit der Platte und anschließend über eine Mutter an eine Innenleiste des Außengehäuses fest verbunden. Nachteilig ist solch ein Zusammenbau jedoch vergleichsweise aufwendig und handhabungs-unfreundlich. Dies umso mehr, wenn das Außengehäuse vergleichsweise geringe Abmessungen aufweist, und damit die Zugänglichkeit zu Bauteilen im Außengehäuses eingeschränkt oder behindert ist. Auch leidet unter solch einer Konstruktion die Wartungsfreundlichkeit - und zwar insbesondere, wenn Bauteile der Sicherheits- und/oder Rettungszeichenleuchten, wie beispielsweise mit der lichtleitenden Platte optisch verbundene Leuchtmittel, auszutauschen sind. Das Dokument EP2650865A ist als nächstliegender Stand der Technik angesehen, und es offenbart alle Merkmale in dem Oberbegriff des Anspruchs 1

Die Erfindung hat sich daher ausgehend von einer eingangs geschilderten Sicherheits- und/oder Rettungszeichenleuchte die Aufgabe gestellt, diese in der Konstruktion zu vereinfachen, damit deren Montage und/oder Demontage ihrer lichtleitenden Platte oder anderer Bauteile schnell und einfach erfolgen kann, ohne die Standfestigkeit der Sicherheits- und/oder Rettungszeichenleuchte zu gefährden.

Die Erfindung löst die gestellte Aufgabe durch die Merkmale des Anspruchs 1.

Weist das Außengehäuse zumindest einen Hinterschnitt auf, mit dem das Schnappelement des Halteelements verschnappt, kann im Gegensatz zum Stand der Technik die Montage und/oder Demontage der lichtleitenden Platte am Außengehäuse erheblich erleichtert werden. Beispielsweise kann gleichzeitig mit einem Einschieben der lichtleitenden Platte in das Außengehäuse dieses über das Halteelement verschnappt werden - was aufwendige Montagearbeiten, beispielsweise zur Verschraubung, ersetzen kann. Auch eine Demontage der lichtleitenden Platte vom Außengehäuse gestaltet sich vergleichsweise handhabungsfreundlich mit einem Lösen der Schnappverbindung.

Zudem kann das Halteelement vor dem Einschieben in das Außengehäuse an der lichtleitenden Platte handhabungsfreundlich vorgesehen werden. Hierzu weist die lichtleitende Platte zumindest eine, insbesondere lochförmige, Halteausnehmung auf, in die der Steg des Halteelements eingreift. Beispielsweise kann hierfür der Steg des Halteelements in die Halteausnehmung eingeschoben werden.

Die Montage und/oder Demontage der lichtleitenden Platte im Außengehäuse kann damit schnell und einfach erfolgen - dies selbst ohne Gebrauch von Werkzeugen. Auch ergibt sich mithilfe des zwischen lichtleitender Platte und Außengehäuse vorgesehenen Halteelements eine besonders feste Halterung, was zu einer vergleichsweise hohen Standfestigkeit der Sicherheits- und/oder Rettungszeichenleuchte führt. Hinzu kommt, dass die Verbindung zwischen lichtleitender Platte und Außengehäuse konstruktiv vergleichsweise einfach gelöst ist, was wiederum eine konstruktiv einfache Sicherheits- und/oder Rettungszeichenleuchte ermöglicht.

Vorzugsweise weist das Außengehäuse pro Halteelement mehrere, insbesondere zwei, Hinterschnitte auf, um damit die Befestigung der lichtleitenden Platte standfester ausbilden zu können. Hierzu weist das, insbesondere im Querschnitt u-förmige, Halteelement mehrere, insbesondere zwei, vom Steg abstehende und ein Schnappelement ausbildende Schenkel auf, wobei die Schnappelemente je mit einem Hinterschnitt verschnappen. Indem auch der Steg des Halteelements über die Halteausnehmung die lichtleitende Platte durchgreift, kann ein, insbesondere u-förmiges, Halteelement geschaffen werden, das in der Art einer Klammer an der lichtleitenden Platte sowie auch am Außengehäuse standfest angreift. Die Standfestigkeit der Sicherheits- und/oder Rettungszeichenleuchte ist damit weiter zu erhöhen.

Die Montage des Halteelements kann weiter erleichtert werden, wenn das Halteelement aus zwei miteinander verbundenen Halteelementteilen besteht, die je das Schnappelement des Halteelements aufweisen, insbesondere ausbilden. So können die Halteelementteile zur Verbindung miteinander beispielsweise zusammengesteckt sein, wenn diese in der Halteausnehmung der lichtleitenden Platte vorgesehen werden.

Beispielsweise bilden die Halteelementteile je einen Stegabschnitt des Stegs des Halteelements aus, über welchen Stegabschnitt die Halteelementteile aneinander anschließen. Damit können die Halteelementteile beim Vorsehen in der Halteausnehmung miteinander handhabungsfreundlich verbunden werden.

Vorzugsweise weist das erste Halteelementteil zumindest einen Vorsprung und das zweite Halteelementteil zumindest einen Rücksprung auf, in den der Vorsprung für eine Verbindung der Halteelementteile eingreift - was den Zusammenbau des Halteelements noch weiter erleichtert. Außerdem kann damit ein standfestes Halteelement trotz seiner Mehrteiligkeit geschaffen werden.

Diese Standfestigkeit kann weiter erhöht werden, wenn jedes Halteelementteil den Vorsprung und den Rücksprung aufweisen, welcher Vorsprung und Rücksprung nebeneinander angeordnet sind, und über die die Halteelementteile miteinander verbunden sind.

Der Konstruktionsaufwand und somit die Herstellungskosten, aber auch der Montageaufwand der Sicherheits- und/oder Rettungszeichenleuchte sind weiter verringerbar, wenn die Halteelementteile ident ausgebildet sind.

Weisen der Vorsprung eine Stiftform und der Rücksprung eine dazu komplementäre, insbesondere zylindrische, Buchsenform auf, kann dies die Montage des Halteelements an der lichtleitenden Platte weiter erleichtern.

Der Zusammenhalt der Halteelementteile ist noch zu verbessern, wenn der Vorsprung in seine Längsrichtung verlaufenden Außenrippen aufweist. Auf diese Weise ist die Standfestigkeit der Sicherheits- und/oder Rettungszeichenleuchte weiter erhöhbar.

Vorzugsweise weist das Außengehäuse zumindest eine Gehäuseöffnung auf, wobei der Hinterschnitt an einer Außenseite des Außengehäuses und anschließend an diese Gehäuseöffnung angeordnet ist. Damit ist einerseits etwa zuverlässig die Befestigung der lichtleitenden Platte einfach zu überprüfen und andererseits auch deren Demontage handhabungsfreundlich durchzuführen.

Beispielsweise kann das Außengehäuse in seiner Längsrichtung zwei Gehäuseschenkel aufweisen, wobei zumindest ein Gehäuseschenkel auf seiner Innenseite eine Vertiefung ausweist, in die das Halteelement einrastet. Damit kann das Halteelement zudem im Außengehäuse in der verschnappten Lage gesichert werden, was die Standfestigkeit der Sicherheits- und/oder Rettungszeichenleuchte weiter erhöhen kann.

Vorzugsweise umfasst das längliche Außengehäuse die erste, insbesondere obere, Schmalseite der lichtleitenden Platte vollständig, um diese sowie auch evtl. in diesem Bereich vorhandene Leuchtmittel nicht nur gegenüber Beschädigungen zu schützen, sondern auch die Schnappverbindung gegenüber Scherkräften zu schützen.

Beispielsweise weist die Halteausnehmung im Querschnitt eine, insbesondere nach oben, offene Umfangskontur auf, um Halteelements und lichtleitende Platte verbessert klemmen zu können.

Die Sicherheits- und/oder Rettungszeichenleuchte kann beispielsweise handhabungsfreundlicher befestigt werden, wenn das Außengehäuse mindestens einen Montagehalter zur Befestigung der Sicherheits- und/oder Rettungszeichenleuchte aufweist. Vorzugsweise weist das Außengehäuse an den freien Enden je einen Montagehalter auf.

Die Konstruktion der Sicherheits- und/oder Rettungszeichenleuchte ist weiter vereinfachbar, wenn auch das Halteelement die Anzeige befestigt, die eine Piktogrammscheibe und ein Piktogramm auf dieser Piktogrammscheibe aufweist. Hierzu durchgreift das Halteelement zusätzlich auch das Piktogramm, wodurch auch diese im Außengehäuse gehalten werden kann.

Die erfindungsgemäße Sicherheits- und/oder Rettungszeichenleuchte eignet sich somit insbesondere für eine Notbeleuchtungsanlage.

In den Figuren ist beispielsweise der Erfindungsgegenstand anhand einer Ausführungsvariante näher dargestellt. Es zeigen
- Fig. 1: eine Explosionszeichnung zu einer Sicherheits- und Rettungszeichenleuchte,
- Fig. 1a und 1b: vergrößerte Ansichten zu einem Halteelementteil eines Halteelements der Sicherheits- und/oder Rettungszeichenleuchte nach Fig. 1,
- Fig. 2: eine aufgerissene dreidimensionale Teilansicht der nach Fig. 1 zusammengesetzten Sicherheits- und/oder Rettungszeichenleuchte,
- Fig. 3: eine Draufsicht zu der nach Fig. 2 dargestellten zusammengesetzten Sicherheits- und/oder Rettungszeichenleuchte.

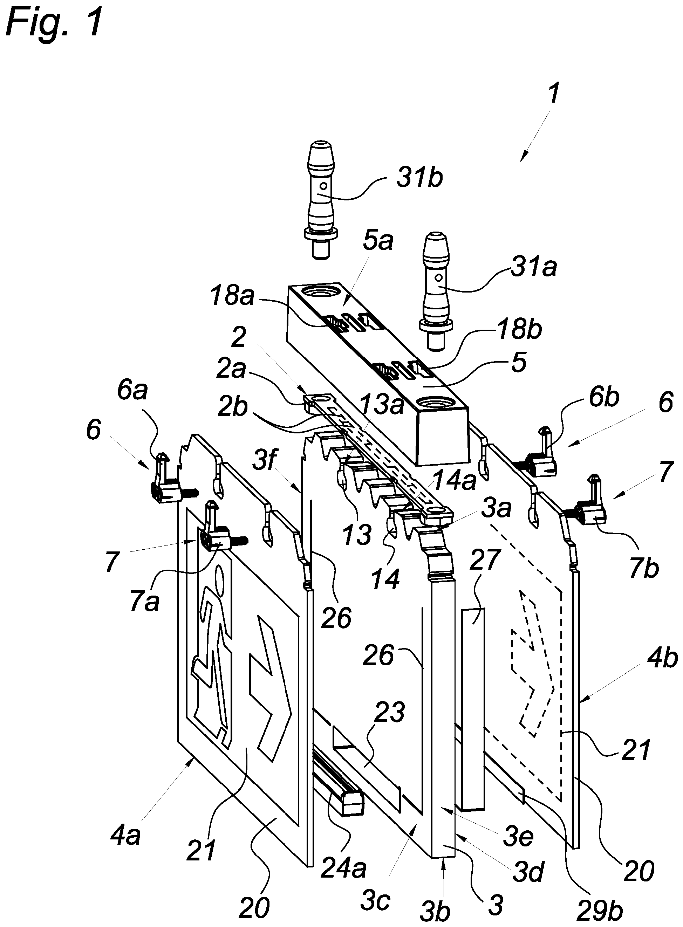

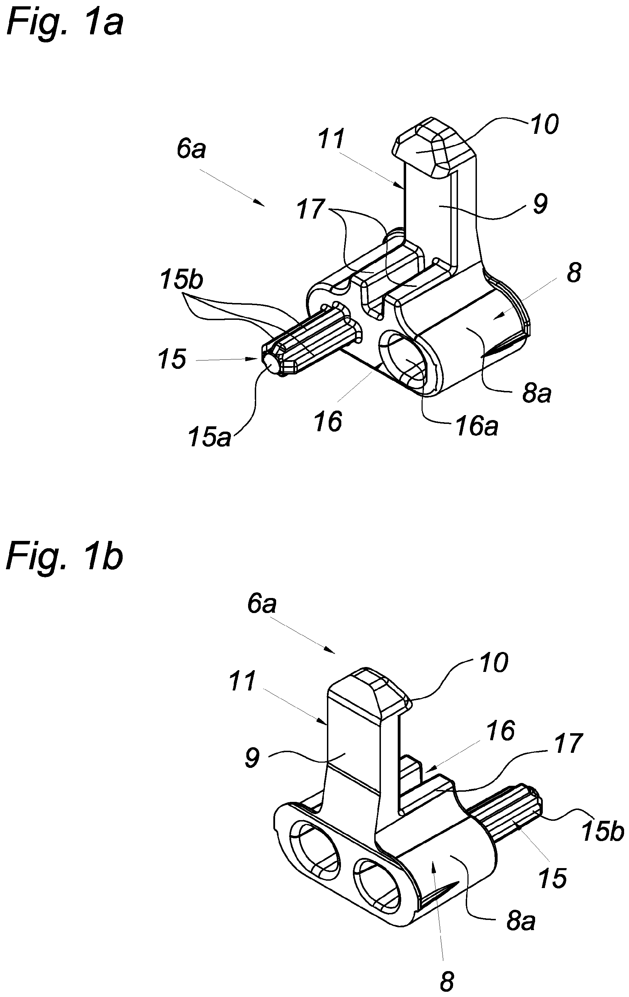

Nach Fig. 1 wird beispielsweise eine Sicherheits- und Rettungszeichenleuchte 1 für eine nicht näher dargestellte Notbeleuchtungsanlage gezeigt. Bei der Sicherheits- und Rettungszeichenleuchte 1 kann es sich auch um eine Sicherheitsleuchte oder Rettungszeichenleuchte handeln - was nicht näher dargestellt worden ist.

Die Sicherheits- und Rettungszeichenleuchte 1 weist ein erstes Leuchtmittel 2 mit einer Leiste 2a, die mehrere LEDs 2b trägt, auf. Das erste Leuchtmittel 2 ist an der Fläche der ersten, oberen Schmalseite 3a einer lichtleitenden Platte 3 vorgesehen und mit der lichtleitenden Platte 3 der Sicherheits- und Rettungszeichenleuchte 1 optisch verbunden.

Damit kann diese lichtleitende Platte 3 zwei auf je einer ihrer Breitseiten 3c, 3d vorgesehenen Anzeigen 4a, 4b hinterleuchten. Die beiden Anzeige 4a, 4b bestehen jeweils aus einer Piktogrammscheibe 20 und einem Piktogramm 21, das auf der Piktogrammscheibe 20 beispielsweise durch ein Druckverfahren vorgesehen ist. Die lichtleitende Platte 3 weist zudem im Bereich ihrer zweiten, unteren Schmalseite 3b eine Ausnehmung 23 auf.

Die lichtleitende Platte 3 ragt an ihrer oberen Schmalseite 3a in ein Außengehäuse 5 der Sicherheits- und Rettungszeichenleuchte 1 ein. Das längliche Außengehäuse 5 umfasst mit seinen Außenseiten 5a bis 5e diese erste obere Schmalseite 3a vollständig, wie in Fig. 1 angedeutet ist.

Zudem wird die lichtleitende Platte 3 in diesem Außengehäuse 5 gehalten. Hierzu weist die Sicherheits- und Rettungszeichenleuchte 1 zwei Halteelemente 6, 7 auf, die zwischen Außengehäuse 5 und lichtleitender Platte 3 vorgesehen sind. Diese Halteelemente 6, 7 weisen hierfür einen Steg 8 und einen Schenkel 9 auf, der vom Steg 8 absteht und mit einem Schnappvorsprung 10 je ein Schnappelement 11, nämlich einen Schnapphaken, ausbilden.

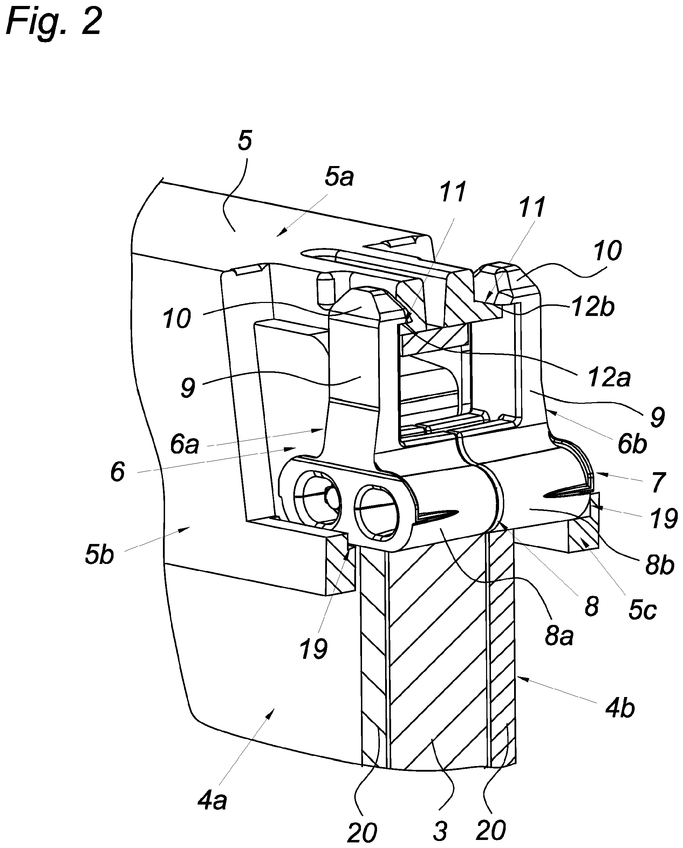

Für eine einfache Montage und/oder Demontage der Sicherheits- und Rettungszeichenleuchte 1 ist die Halterung für die lichtleitende Platte 3 im Außengehäuse 5 besonders ausgebildet. So weist erfindungsgemäß das Außengehäuse 5 einen Hinterschnitt 12a, 12b auf, mit dem das betreffende Schnappelement 11 des jeweiligen Halteelements 6, 7 verschnappt. Zudem weist die lichtleitende Platte 3 eine lochförmige Halteausnehmung 13, 14 auf. In diese lochförmige Halteausnehmung 13, 14 greift der Steg 8 des jeweiligen Halteelements 6, 7 ein, wie in den Figuren 2 und 2a zu erkennen. Damit ist die lichtleitende Platte 3 standfest am Außengehäuse 5 gehalten. Zudem kann die Montage und/oder Demontage der lichtleitenden Platte 3 ohne Werkzeug erfolgen - was die Herstellung und/oder Wartung der Sicherheits- und Rettungszeichenleuchte 1 erheblich erleichtert.

Vorzugsweise weist, wie in Fig. 2 zu erkennen, das Außengehäuse für jedes Halteelement 6, 7 zwei Hinterschnitte 12a, 12b auf. Hierzu stehen vom im Querschnitt u-förmigen Halteelement 6, 7 je zwei vom Steg 8 abstehende Schenkel 9 mit einem Schnappvorsprung 10 ab, die je ein Schnappelement 11 ausbildenden. Die beiden Schnappelemente 11 verschnappen mit den beiden Hinterschnitten 12a, 12b. Dies führt zu einer, gegenüber mechanischen Belastungen robusten Halterung der lichtleitenden Platte 3 am Außengehäuse. Zudem durchgreift der Steg 8 die lochförmigen Halteausnehmung 13, 14 - was ein Abziehen des Halteelements 6, 7 von der lichtleitenden Platte 3 erschwert und damit die Standfestigkeit der Halterung weiter verbessert.

Das Halteelement 6, 7 kann auch einfach an der lichtleitenden Platte 3 vorgesehen werden, indem das Halteelement 6, 7 aus zwei miteinander verbunden Halteelementteilen 6a, 6b oder 7a, 7b besteht, welche zusammengesteckt werden können. Wie in Fig. 2 zu erkennen, werden diese Halteelementteile 6a, 6b oder 7a, 7b am Steg 8 zusammengesteckt, und zwar über zwei Stegabschnitte 8a, 8b, anhand welcher die die Halteelementteile 6a, 6b oder 7a, 7b aneinander anschließen. Jedes Halteelementteil 6a, 6b oder 7a, 7b, bildet zudem je ein Schnappelement 11 des Halteelements 6, 7 aus. Die Halteelemente 6, 7 sind damit zweiteilig und werden beim Vorsehen an der lichtleitenden Platte 3 reproduzierbar zusammengesetzt, was besonders handhabungsfreundlich ist.

Der Zusammenhalt der Halteelementteile 6a, 6b oder 7a, 7b ist außerdem äußerst zuverlässig. So weist jedes Halteelementteil 6a, 6b oder 7a, 7b einen Vorsprung 15 in Form eines Stifts 15a und einen Rücksprung 16 in Form einer zylindrischen Buchse 16a auf.

Vorsprung 15 und Rücksprung 16 sind an jedem Halteelementteil 6a, 6b oder 7a, 7b nebeneinander angeordnet und komplementär zueinander ausgebildet, damit die Halteelementteil 6a, 6b oder 7a, 7b zusammensteckt werden können, wie in Fig. 1a und 1b zu erkennen.

Da die Halteelementteile 6a, 6b oder 7a, 7b damit mithilfe von zwei Vorsprüngen 15 und zwei Rücksprüngen 16 formschlüssig (da eine Bewegungsrichtung der verbundenen Halteelementteile 6a, 6b oder 7a, 7b blockiert wird) und auch kraftschlüssig miteinander verbunden werden, wird zwischen diesen eine standfeste Verbindung erreicht. Dies umso mehr, indem der Vorsprung 15 vier in seiner Längsrichtung verlaufende Außenrippen 15b aufweist.

Konstruktive Einfachheit wird erreicht, indem die Halteelementteile 6a, 6b, 7a, 7b ident ausgebildet sind, wie dies auch in den Figuren 1, 1a, 1b und 2 zu erkennen.

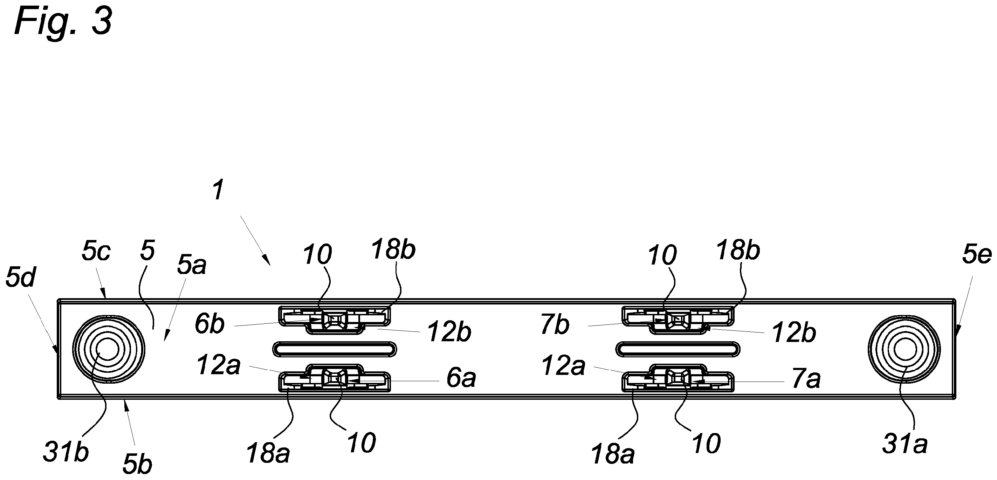

Entsprechend der Fig. 3 weist das Außengehäuse 5 an seiner oberen Außenseite 5a mehrere Gehäuseöffnungen 18a, 18b auf. Die sich an Außenseite 5a des Außengehäuses 5 befindlichen Hinterschnitte 12a, 12b schließen an die jeweilige Gehäuseöffnung 18a, 18b an, sodass die jeweilige Schnappverbindung zwischen lichtleitender Platte 3 und Außengehäuse 5 vergleichsweise leicht zugänglich ist. Dies erleichtert die Wartung der Sicherheits- und Rettungszeichenleuchte 1 erheblich.

Außerdem rasten die Halteelemente 6, 7 im Außengehäuse 5 ein. Hierzu weist das Außengehäuse 5 an den beiden einander gegenüberliegenden Gehäuseschenkeln 5b, 5c in seiner Längsrichtung für jedes Halteelementteil 6a, 6b oder 7a, 7b eine Vertiefung 19 auf. Damit rastet das Halteelement 6, 7 auch zwischen den Gehäuseschenkel 5b, 5c des Außengehäuses 5 ein, was den Sitz des Halteelements 6, 7 im Außengehäuses 5 standfest sichert - und insbesondere auch bei Bewegung der lichtleitenden Platt 3 entgegen die Längserstreckung des Außengehäuses 5 von Vorteil sein kann.

Das Außengehäuse 5 weist zumindest einen, im Ausführungsbeispiel zwei, Montagehalter 31a, 31b auf, über welche die Sicherheits- und/oder Rettungszeichenleuchte befestigt werden kann. Die stiftförmigen Montagehalter 31a, 31b dienen beispielsweise auch zur elektrischen Energieversorgung. Ein anders ausgebildeter Montagehalter 31a, 31b ist vorstellbar, beispielsweise ein Seil. Vorzugsweise sind die Montagehalter 31a, 31b im Eckbereich des Außengehäuses 5 angeordnet. Mithilfe der Montagehalter 31a, 31b ist eine stabile und standfeste Montage der Sicherheits- und Rettungszeichenleuchte 1 möglich.

Zudem kann in Fig. 1 erkannt werden, dass die Halteausnehmung 13, 14 im Querschnitt eine nach oben offene Umfangskontur 13a, 14a aufweist. Dies kann ein Verklemmen der Halteelemente 6, 7 erleichtern, welche hierzu beispielsweise mit ihren Längsrippen 17 dort eingreifen.

Das Halteelement 6, 7 - nach Fig. 1 die zwei Halteelemente 6, 7 - durchgreift zusätzlich auch die beiden Anzeigen 4a, 4b, wie in Fig. 1 und 2 erkannt werden kann. Die Piktogrammscheiben 20 sind hierfür ebenso ausgenommen, damit der jeweilige Abschnitt des Steg 8 der Halteelement 6, 7 diese durchgreifen können. Damit werden die Anzeigen 4a, 4b standfest im Außengehäuse 5 sowie auch an der lichtleitenden Platte 3 gehalten.

Die Sicherheits- und Rettungszeichenleuchte 1 weist auch eine optische Linse 24a auf. Diese optische Linse 24a dient dazu, die Abstrahlcharakteristik der Sicherheits- und Rettungszeichenleuchte 1 einzustellen, damit eine gewünschte Umgebungsbeleuchtung zu schaffen. Die optische Linse 24a ist als Einsatz in der Ausnehmung 23 vorgesehen. Dies erleichtert die Montage der Linse 24a und eröffnet auch die Option, entsprechend den Voraussetzungen zur Beleuchtung der Umgebung der Sicherheits- und Rettungszeichenleuchte 1 die notwendige Linse 24a auszuwählen. Die Sicherheits- und Rettungszeichenleuchte 1 ist daher äußerst flexibel einsetzbar. Außerdem ist diese optische Linse 24a im optischen Weg zwischen dem Leuchtmittel 2 und der zweiten unteren Schmalseite 3b und den Piktogrammscheiben 20 angeordnet. Die Linse 24a, 24b lenkt nämlich das Licht des Leuchtmittels 2 zur zweiten unteren Schmalseite 3b als auch zur Piktogrammscheibe 20. Die Linse 24a liegt im optischen Weg direkt dem ersten Leuchtmittel 2 gegenüber, da diese von diesem Leuchtmittel 2 auch direkt angestrahlt. Die Piktogrammscheiben 20 der beiden Anzeigen 4a, 4b verlaufen über diese Ausnehmung 23 und verschließt damit diese Ausnehmung 23, wie in Fig. 1 zu erkennen ist.

Im Allgemeinen wird erwähnt, dass unter einer optischen Linse 24a, 24b jedes optische Element zur Erzielung einer Abbildung bzw. zur Veränderung der Abstrahlcharakteristik 30 Sicherheits- und Rettungszeichenleuchte 1 zu Umgebungsbeleuchtung verstanden werden kann. Beispielsweise kann hierzu eine sphärische Linse, Sammellinse, Zerstreuungslinse, Fresnel-Linse, Stufenlinse etc. verwendet werden. Weiter wird im Allgemeinen erwähnt, dass unter Breitseite 3b, 3c einer Platte 3 ihre Front- und/oder Rückseite verstanden werden kann, die durch Schmalseiten 3a, 3d, 3e, 3f voneinander beabstandet sind. Wie zudem der Figuren 1 zu entnehmen, durchdringt die Ausnehmung 23 die lichtleitende Platte 3 vollständig, und zwar von der ersten Breitseite 3b bis zur gegenüberliegenden zweiten Breitseite 3c.

Zudem weist die lichtleitende Platte 3 an zumindest einer Breitseite 3b zumindest einen u-förmig verlaufenden Schlitz 26 mit einem dort vorgesehenen optischen Reflektor 27 als Spiegel, insbesondere Planspiegel, auf. Der Reflektor 27 wird beispielsweise von einer Aluminiumfolie ausgebildet. Der Schlitz 26 durchdringt die lichtleitende Platte 3.

## Patentansprüche

1. Sicherheits- und/oder Rettungszeichenleuchte, insbesondere für eine Notbeleuchtungsanlage, mit mindestens einem ersten Leuchtmittel (2), insbesondere mit mindestens einer LED, mit einer mit dem ersten Leuchtmittel (2) optisch verbundenen, lichtleitenden Platte (3) zur Hinterleuchtung einer Anzeige (4a, 4b) und mit einem, insbesondere im Querschnitt u-förmigen, Außengehäuse (5), in das eine erste, insbesondere obere, Schmalseite (3a) der lichtleitenden Platte (3) einragt, und mit zumindest einem zwischen Außengehäuse (5) und lichtleitender Platte (3) vorgesehenen Halteelement (6, 7), das die lichtleitende Platte (3) im Außengehäuse (5) hält und hierfür einen Steg (8) und zumindest einen davon abstehenden und ein Schnappelement (11) ausbildenden Schenkel (9) mit einem Schnappvorsprung (10) aufweist, **dadurch gekennzeichnet, dass** das Außengehäuse (5) zumindest einen Hinterschnitt (12a, 12b) aufweist, mit dem das Schnappelement (11) des Halteelements (6, 7) verschnappt, und dass die lichtleitende Platte (3) zumindest eine, insbesondere lochförmige, Halteausnehmung (13, 14) aufweist, in die der Steg (8) des Halteelements (6, 7) eingreift.

2. Sicherheits- und/oder Rettungszeichenleuchte nach Anspruch 1, **dadurch gekennzeichnet, dass** das Außengehäuse (5) pro Halteelement (6, 7) mehrere, insbesondere zwei, Hinterschnitte (12a, 12b) aufweist, und dass das, insbesondere im Querschnitt u-förmige, Halteelement (6, 7) mehrere, insbesondere zwei, vom Steg (8) abstehende und ein Schnappelement (11) ausbildende Schenkel (9) aufweist, wobei die Schnappelemente (11) je mit einem Hinterschnitt (12a, 12b) verschnappen und der Steg (8) des Halteelements (6, 7) über die Halteausnehmung (13, 14) die lichtleitende Platte (3) durchgreift.

3. Sicherheits- und/oder Rettungszeichenleuchte nach Anspruch 1 oder 2, **dadurch gekennzeichnet, dass** das Halteelement (6, 7) aus zwei miteinander verbundenen, insbesondere zusammengesteckten, Halteelementteilen (6a, 6b oder 7a, 7b) besteht, die je das Schnappelement (11) des Halteelements (6, 7) aufweisen, insbesondere ausbilden.

4. Sicherheits- und/oder Rettungszeichenleuchte nach Anspruch 3, **dadurch gekennzeichnet, dass** die Halteelementteile (6a, 6b oder 7a, 7b) je einen Stegabschnitt (8a, 8b) des Stegs (8) des Halteelements (6, 7) ausbilden, über welchen Stegabschnitt (8a, 8b) die Halteelementteile (6a, 6b oder 7a, 7b) aneinander anschließen.

5. Sicherheits- und/oder Rettungszeichenleuchte nach einem der Ansprüche 3 bis 4, **dadurch gekennzeichnet, dass** das erste Halteelementteil (6a, 7a) zumindest einen Vorsprung (15) und das zweite Halteelementteil (6b, 7b) zumindest einen Rücksprung (16), in den der Vorsprung (15) für eine Verbindung der beiden Halteelementteil (6b, 7b) eingreift, aufweisen.

6. Sicherheits- und/oder Rettungszeichenleuchte nach Anspruch 5, **dadurch gekennzeichnet, dass** jedes Halteelementteil (6a, 6b oder 7a, 7b) den Vorsprung (15) und den Rücksprung (16) aufweist, welcher Vorsprung (15) und Rücksprung (16) nebeneinander angeordnet sind, und über die die Halteelementteile (6a, 6b oder 7a, 7b) miteinander verbunden sind.

7. Sicherheits- und/oder Rettungszeichenleuchte nach Anspruch 6, **dadurch gekennzeichnet, dass** die Halteelementteile (6a, 6b oder 7a, 7b) ident ausgebildet sind.

8. Sicherheits- und/oder Rettungszeichenleuchte nach einem der Ansprüche 5 bis 7, **dadurch gekennzeichnet, dass** der, insbesondere in seine Längsrichtung verlaufende Außenrippen (15b) aufweisende, Vorsprung (15) eine Stiftform und der Rücksprung (16) eine dazu komplementäre, insbesondere zylindrische, Buchsenform aufweisen.

9. Sicherheits- und/oder Rettungszeichenleuchte nach einem der Ansprüche 1 bis 8, **dadurch gekennzeichnet, dass** das Außengehäuse (5) zumindest eine Gehäuseöffnung (18a, 18b) aufweist, und dass der Hinterschnitt (12a, 12b) an einer, insbesondere oberen, Außenseite (5a) des Außengehäuses (5) und anschließend an diese Gehäuseöffnung (18a, 18b) angeordnet ist.

10. Sicherheits- und/oder Rettungszeichenleuchte nach einem der Ansprüche 1 bis 9, **dadurch gekennzeichnet, dass** das Außengehäuse (5) in seiner Längsrichtung zwei Gehäuseschenkel (5b, 5c) aufweist, wobei zumindest ein Gehäuseschenkel (5b, 5c) auf seiner Innenseite eine Vertiefung (19) aufweist, in die das Halteelement (6, 7) einrastet.

11. Sicherheits- und/oder Rettungszeichenleuchte nach einem der Ansprüche 1 bis 10, **dadurch gekennzeichnet, dass** das längliche Außengehäuse (5) die erste, insbesondere obere, Schmalseite (3a) der lichtleitenden Platte (3) vollständig umfasst.

12. Sicherheits- und/oder Rettungszeichenleuchte nach einem der Ansprüche 1 bis 11, **dadurch gekennzeichnet, dass** die Halteausnehmung (13, 14) im Querschnitt eine, insbesondere nach oben, offene Umfangskontur (13a, 14a) aufweist.

13. Sicherheits- und/oder Rettungszeichenleuchte nach einem der Ansprüche 1 bis 12, **dadurch gekennzeichnet, dass** das Außengehäuse (5) mindestens einen Montagehalter (31a, 31b) zur Befestigung der Sicherheits- und/oder Rettungszeichenleuchte (1) aufweist.

14. Sicherheits- und/oder Rettungszeichenleuchte nach einem der Ansprüche 1 bis 13, **dadurch gekennzeichnet, dass** die Anzeige (4a, 4b) eine Piktogrammscheibe (20) und ein Piktogramm (21) auf dieser Piktogrammscheibe (20) aufweist, wobei das Halteelement (6, 7) zusätzlich auch das Piktogramm (21) durchgreift und im Außengehäuse (5) hält.

15. Notbeleuchtungsanlage mit einer Sicherheits- und/oder Rettungszeichenleuchte (1) nach einem der Ansprüche 1 bis 14.

## Claims

1. Safety and/or emergency sign light, more particularly for an emergency lighting system, having at least one first lighting means (2), more particularly having at least one LED, having a light guide plate (3) optically connected to the first lighting means (2) for backlighting a display (4a, 4b), and having an outer housing (5), more particularly U-shaped in cross-section, into which a first, more particularly upper, narrow side (3a) of the light guide plate (3) projects, and having at least one retaining element (6, 7) provided between the outer housing (5) and the light guide plate (3), which holds the light guide plate (3) in the outer housing (5) and has a web (8) and at least one leg (9) projecting therefrom and forming a snap element (11) with a snap projection (10), **characterized in that** the outer housing (5) has at least one undercut (12a, 12b) with which the snap element (11) of the retaining element (6, 7) snap-fits, and **in that** the light guide plate (3) has at least one, more particularly hole-shaped, retaining recess (13, 14) into which the web (8) of the retaining element (6, 7) engages.

2. Safety and/or emergency sign light according to claim 1, **characterized in that** the outer housing (5) has several, more particularly two, undercuts (12a, 12b) per retaining element (6, 7), and **in that** the retaining element (6, 7), which is more particularly U-shaped in cross-section, has several, more particularly two, legs (9) projecting from the web (8) and forming a snap element (11), wherein the snap elements (11) each snap into an undercut (12a, 12b) and the web (8) of the retaining element (6, 7) engages through the light guide plate (3) via the retaining recess (13, 14).

3. Safety and/or emergency sign light according to claim 1 or 2, **characterized in that** the retaining element (6, 7) consists of two interconnected, more particularly plugged-together, retaining element parts (6a, 6b or 7a, 7b) which each have, more particularly form, the snap element (11) of the retaining element (6, 7).

4. Safety and/or emergency exit sign according to claim 3, **characterized in that** the retaining element parts (6a, 6b or 7a, 7b) each form a web section (8a, 8b) of the web (8) of the retaining element (6, 7), via which web section (8a, 8b) the retaining element parts (6a, 6b or 7a, 7b) adjoin each other.

5. Safety and/or emergency sign light according to one of claims 3 to 4, **characterized in that** the first retaining element part (6a, 7a) has at least one projection (15) and the second retaining element part (6b, 7b) has at least one recess (16) into which the projection (15) engages to connect the two retaining element parts (6b, 7b).

6. Safety and/or emergency exit sign according to claim 5, **characterized in that** each retaining element part (6a, 6b or 7a, 7b) has the projection (15) and the recess (16), which projection (15) and recess (16) are arranged next to each other and via which the retaining element parts (6a, 6b or 7a, 7b) are connected to each other.

7. Safety and/or emergency sign light according to claim 6, **characterized in that** the retaining element parts (6a, 6b or 7a, 7b) are identically designed.

8. Safety and/or emergency exit sign according to one of claims 5 to 7, **characterized in that** the projection (15), which has outer ribs (15b) running more particularly in its longitudinal direction, has a pin shape and the recess (16) has a complementary, more particularly cylindrical, socket shape.

9. Safety and/or emergency exit sign according to one of claims 1 to 8, **characterized in that** the outer housing (5) has at least one housing opening (18a, 18b), and **in that** the undercut (12a, 12b) is arranged on one, more particularly upper, outer side (5a) of the outer housing (5) and adjacent to this housing opening (18a, 18b).

10. Safety and/or emergency sign light according to one of claims 1 to 9, **characterized in that** the outer housing (5) has two housing legs (5b, 5c) in its longitudinal direction, wherein at least one housing leg (5b, 5c) has a depression (19) on its inner side into which the retaining element (6, 7) latches.

11. Safety and/or emergency sign light according to one of claims 1 to 10, **characterized in that** the elongated outer housing (5) completely encloses the first, more particularly upper, narrow side (3a) of the light guide plate (3).

12. Safety and/or emergency sign light according to one of claims 1 to 11, **characterized in that** the retaining recess (13, 14) has a cross-section with a circumferential contour (13a, 14a) that is open, more particularly at the top.

13. Safety and/or emergency sign light according to one of claims 1 to 12, **characterized in that** the outer housing (5) has at least one mounting bracket (31a, 31b) for fastening the safety and/or emergency sign light (1).

14. Safety and/or emergency sign light according to one of claims 1 to 13, **characterized in that** the display (4a, 4b) has a pictogram panel (20) and a pictogram (21) on this pictogram panel (20), wherein the retaining element (6, 7) additionally also engages through the pictogram (21) and holds it in the outer housing (5).

15. Emergency lighting system with a safety and/or emergency sign light (1) according to one of claims 1 to 14.

## Revendications

1. Lampe de sécurité et/ou signal de secours, en particulier pour une installation d'éclairage de secours, avec au moins un premier luminaire (2), en particulier avec au moins une DEL, avec une plaque (3) transmettant la lumière en liaison optique avec le premier luminaire (2) pour l'éclairage d'arrière-plan d'une signalétique (4a, 4b) et avec un boîtier extérieur (5), ayant en particulier une section en forme de U, dans lequel dépasse un premier petit côté (3a), en particulier supérieur, de la plaque transmettant la lumière (3), et avec au moins un élément de maintien (6, 7) prévu entre le boîtier extérieur (5) et la plaque transmettant la lumière (3), qui maintient la plaque transmettant la lumière (3) dans le boîtier extérieur (5) et comporte pour cela une barrette (8) et au moins un bras (9) qui dépasse de celle-ci et forme un élément d'enclenchement (11) avec une saillie d'enclenchement (10), **caractérisée en ce que** le boîtier extérieur (5) comporte au moins une contre-dépouille (12a, 12b) avec laquelle l'élément d'enclenchement (11) de l'élément de maintien (6, 7) s'enclenche, et **en ce que** la plaque transmettant la lumière (3) comporte au moins un évidement de maintien (13, 14), en particulier en forme de trou, dans lequel la barrette (8) de l'élément de maintien (6, 7) se met en prise.

2. Lampe de sécurité et/ou signal de secours selon la revendication 1, **caractérisée en ce que** le boîtier extérieur (5) comporte pour chaque élément de maintien (6, 7) plusieurs contre-dépouilles (12a, 12b), en particulier deux, et **en ce que** l'élément de maintien (6, 7) qui a en particulier une section en forme de U comporte plusieurs bras (9), en particulier deux, qui dépassent de la barrette (8) et forment un élément d'enclenchement (11), les éléments d'enclenchement (11) s'enclenchant chacun avec une contre-dépouille (12a, 12b) et la barrette (8) de l'élément de maintien (6, 7) traversant la plaque transmettant la lumière (3) à travers l'évidement de maintien (13, 14).

3. Lampe de sécurité et/ou signal de secours selon la revendication 1 ou 2, **caractérisée en ce que** l'élément de maintien (6, 7) se compose de deux parties d'élément de maintien (6a, 6b ou 7a, 7b) reliées l'une à l'autre, en particulier emboîtées, dont chacune comporte, en particulier forme, l'élément d'enclenchement (11) de l'élément de maintien (6, 7).

4. Lampe de sécurité et/ou signal de secours selon la revendication 3, **caractérisée en ce que** les parties d'élément de maintien (6a, 6b ou 7a, 7b) forment chacune un segment de barrette (8a, 8b) de la barrette (8) de l'élément de maintien (6, 7), les parties d'élément de maintien (6a, 6b ou 7a, 7b) se raccordant les unes aux autres par ces segments de barrette (8a, 8b).

5. Lampe de sécurité et/ou signal de secours selon l'une des revendications 3 à 4, **caractérisée en ce que** la première partie d'élément de maintien (6a, 7a) comporte au moins une saillie (15) et la deuxième partie d'élément de maintien (6b, 7b) au moins un retrait (16) dans lequel la saillie (15) se met en prise en vue de la liaison des deux parties d'élément de maintien (6b, 7b).

6. Lampe de sécurité et/ou signal de secours selon la revendication 5, **caractérisée en ce que** chaque partie d'élément de maintien (6a, 6b ou 7a, 7b) comporte la saillie (15) et le retrait (16), la saillie (15) et le retrait (16) étant disposés l'un à côté de l'autre et reliant les parties d'élément de maintien (6a, 6b ou 7a, 7b) les unes aux autres.

7. Lampe de sécurité et/ou signal de secours selon la revendication 6, **caractérisée en ce que** les parties d'élément de maintien (6a, 6b ou 7a, 7b) sont de conception identique.

8. Lampe de sécurité et/ou signal de secours selon l'une des revendications 5 à 7, **caractérisée en ce que** la saillie (15), qui présente des nervures extérieures (15b) courant en particulier dans le sens de sa longueur, présente la forme d'une goupille et le retrait (16) une forme femelle complémentaire, en particulier cylindrique.

9. Lampe de sécurité et/ou signal de secours selon l'une des revendications 1 à 8, **caractérisée en ce que** le boîtier extérieur (5) comporte au moins une ouverture du boîtier (18a, 18b) et **en ce que** la contre-dépouille (12a, 12b) est disposée sur une face extérieure (5a), en particulier supérieure, du boîtier extérieur (5) et à la suite de cette ouverture du boîtier (18a, 18b).

10. Lampe de sécurité et/ou signal de secours selon l'une des revendications 1 à 9, **caractérisée en ce que** le boîtier extérieur (5) présente dans le sens de sa longueur deux bras de boîtier (5b, 5c) dont au moins un bras de boîtier (5b, 5c) présente sur sa face intérieure un creux (19) dans lequel l'élément de maintien (6, 7) s'enclenche.

11. Lampe de sécurité et/ou signal de secours selon l'une des revendications 1 à 10, **caractérisée en ce que** le boîtier extérieur (5) allongé entoure complètement le premier petit côté (3a), en particulier supérieur, de la plaque transmettant la lumière (3).

12. Lampe de sécurité et/ou signal de secours selon l'une des revendications 1 à 11, **caractérisée en ce que** l'évidement de maintien (13, 14) présente en section un contour de circonférence (13a, 14a) ouvert, en particulier vers le haut.

13. Lampe de sécurité et/ou signal de secours selon l'une des revendications 1 à 12, **caractérisée en ce que** le boîtier extérieur (5) comporte au moins un support de montage (31a, 31b) pour la fixation de la lampe de sécurité et/ou signal de secours (1).

14. Lampe de sécurité et/ou signal de secours selon l'une des revendications 1 à 13, **caractérisée en ce que** la signalétique (4a, 4b) comporte un panneau de pictogramme (20) et un pictogramme (21) sur ce panneau de pictogramme (20), l'élément de maintien (6, 7) traversant aussi le pictogramme (21) et le retenant dans le boîtier extérieur (5).

15. Installation d'éclairage de secours munie d'une lampe de sécurité et/ou signal de secours (1) selon l'une des revendications 1 à 14.
